# FASCICULE DE BREVET EUROPEEN

(11) **EP 2 996 525 B1**
(45) Date de publication et mention de la délivrance du brevet: **15.03.2017**
(21) Numéro de dépôt: 14729410.2
(22) Date de dépôt: 12.05.2014
(51) Int. Cl.: A47J 36/20, A47J 27/04

(54) **ELEMENT DE CUISSON À FOND AMOVIBLE POUR CUISEUR VAPEUR**
KOCHELEMENT MIT ABNEHMBAREM BODEN FÜR DAMPFGARER
COOKING ELEMENT HAVING A REMOVABLE BOTTOM FOR STEAM COOKER

(30) Priorité: 14.05.2013 FR 1354323
(43) Date de publication de la demande: 23.03.2016
(73) Titulaire: SEB S.A., 69130 Ecully (FR)
(72) Inventeur: DIRAND, Pascal, F-21160 Marsannay La Cote (FR)
(74) Mandataire: Cémeli, Eric Philippe Laurent
(86) Numéro de dépôt international: PCT/FR2014/051095
(87) Numéro de publication internationale: WO 2014/184479

(56) Documents cités:
- WO-A1-2012/007690
- FR-A1- 2 783 685
- FR-A1- 2 840 793
- JP-A- 2011 206 362
- US-A- 255 232
- US-A1- 2008 210 101

## Description

La présente invention concerne le domaine technique des cuiseurs vapeur, comportant les appareils électriques de cuisson à la vapeur et les ustensiles de cuisson à la vapeur.

La présente invention concerne plus particulièrement un élément de cuisson à fond amovible pour cuiseur vapeur. Un tel élément de cuisson est prévu pour être disposé au dessus d'un dispositif de production de vapeur. Si désiré, plusieurs éléments de cuisson peuvent être empilés pour former un cuiseur vapeur étagé.

La présente invention concerne également un appareil électrique de cuisson à la vapeur comportant une base de production de vapeur portant au moins un élément de cuisson du type précité. La présente invention n'est toutefois pas limitée aux cuiseurs vapeur électriques, mais inclut aussi les multicuiseurs et les robots culinaires chauffants comportant un élément de cuisson à la vapeur.

Le document WO 00/30511 divulgue un élément de cuisson pour cuiseur vapeur, comportant une paroi latérale tubulaire munie d'un épaulement interne prévu pour recevoir un fond amovible. La paroi latérale et le fond amovible peuvent être réalisés en polycarbonate. Cette matière plastique présente les avantages d'être transparente, d'être très résistante aux chocs, de présenter une résistance mécanique suffisante jusqu'à la température de 100°C, et de ne pas se tacher au contact d'aliments tels que les tomates ou les carottes. De plus cette matière plastique présente un faible retrait, se déforme peu au moulage, est relativement stable dimensionnellement jusqu'à la température de 100°C et présente un prix peu élevé. Toutefois cette matière plastique présente l'inconvénient d'une mauvaise résistance à l'hydrolyse. Cette matière plastique présente également l'inconvénient de contenir du bisphénol A.

Il est connu de réaliser des parois latérales de cuiseur vapeur en polyamide (par exemple en PA12 Grilamid) ou en polyethersulfone (PESU). Ces matières plastiques transparentes sont exemptes de bisphénol A mais présentent toutefois l'inconvénient d'être beaucoup plus onéreuses que le polycarbonate.

Le document WO2012/007690 divulgue un élément de cuisson pour cuiseur vapeur, comportant une paroi latérale tubulaire portant un fond amovible, dans lequel la paroi latérale tubulaire peut être réalisée en copolyester tel que le Tritan^{™}. Cette matière plastique transparente présente l'avantage d'être dépourvue de bisphénol A. Toutefois cette matière plastique présente l'inconvénient de présenter une résistance mécanique sous charge limitée, notamment à la température de 100°C. De plus, des phénomènes de fissuration ont été observés avec cette matière plastique.

Le document JP2011206362 divulgue un élément de cuisson pour cuiseur vapeur, comportant une paroi latérale tubulaire présentant une ouverture inférieure, ainsi qu'un fond amovible reposant sur des protubérances issues de la paroi latérale tubulaire. Cette disposition permet d'obtenir un fond amovible présentant des zones d'appui espacées portées par la paroi latérale tubulaire, qui ménagent des passages d'écoulement pour les jus ou les condensats entre la paroi latérale tubulaire et le fond amovible. Cette disposition présente toutefois l'inconvénient de générer des contraintes dans la partie inférieure de la paroi latérale tubulaire.

Un objet de la présente invention est de proposer un élément de cuisson à fond amovible pour cuiseur vapeur, qui comporte une paroi latérale tubulaire en matière plastique transparente exempte de bisphénol A, dont la réalisation soit économique.

Un autre objet de la présente invention est de proposer un élément de cuisson à fond amovible pour cuiseur vapeur, qui comporte une paroi latérale tubulaire en matière plastique transparente exempte de bisphénol A, dans laquelle les phénomènes de fissuration sont limités ou inexistants.

Un autre objet de la présente invention est de proposer un élément de cuisson à fond amovible pour cuiseur vapeur, qui comporte une paroi latérale tubulaire en matière plastique transparente exempte de bisphénol A, et qui ne soit pas susceptible de se tacher au contact d'aliments tels que les tomates ou les carottes.

Un autre objet de la présente invention est de proposer un élément de cuisson à fond amovible pour cuiseur vapeur, qui comporte une paroi latérale tubulaire en matière plastique transparente exempte de bisphénol A, et qui présente une bonne résistance à l'hydrolyse.

Un autre objet de la présente invention est de proposer un appareil électrique de cuisson à la vapeur comprenant au moins un élément de cuisson à fond amovible, qui comporte une paroi latérale tubulaire en matière plastique transparente exempte de bisphénol A, dont la réalisation soit économique.

Un autre objet de la présente invention est de proposer un appareil électrique de cuisson à la vapeur comprenant au moins un élément de cuisson à fond amovible, qui comporte une paroi latérale tubulaire en matière plastique transparente exempte de bisphénol A, dans laquelle les phénomènes de fissuration sont limités ou inexistants.

Un autre objet de la présente invention est de proposer un appareil électrique de cuisson à la vapeur comprenant au moins un élément de cuisson à fond amovible, qui comporte une paroi latérale tubulaire en matière plastique transparente exempte de bisphénol A, et qui ne soit pas susceptible de se tacher au contact d'aliments tels que les tomates ou les carottes.

Un autre objet de la présente invention est de proposer un appareil électrique de cuisson à la vapeur comprenant au moins un élément de cuisson à fond amovible, qui comporte une paroi latérale tubulaire en matière plastique transparente exempte de bisphénol A, et qui présente une bonne résistance à l'hydrolyse.

Ces objets sont atteints avec un élément de cuisson pour cuiseur vapeur, comportant une paroi latérale tubulaire présentant une extrémité inférieure ouverte ainsi qu'un fond amovible monté à l'intérieur de la paroi latérale tubulaire, la paroi latérale tubulaire étant réalisée en matériau plastique appartenant à la famille des copolyesters, du fait que le fond amovible présente des zones d'appui espacées ménageant des passages d'écoulement avec une face intérieure de la paroi latérale tubulaire, et que chaque zone d'appui du fond amovible est formée par une protubérance reposant sur une portion inclinée de la face intérieure de la paroi latérale tubulaire déversant vers l'extrémité inférieure ouverte de la paroi latérale tubulaire. Ces dispositions permettent de réduire ou de supprimer à l'intérieur de la paroi latérale tubulaire les conformations spécifiques prévues pour le support du fond amovible, tout en assurant un bon écoulement des jus et des condensats vers l'extrémité inférieure ouverte. Ces dispositions permettent de réaliser un élément de cuisson comportant une paroi latérale tubulaire réalisée en matériau plastique appartenant à la famille des copolyesters dans laquelle les phénomènes de fissuration sont limités ou inexistants. Ces dispositions permettent de réduire ou de supprimer à l'intérieur de la paroi latérale tubulaire les conformations spécifiques prévues pour le support du fond amovible, tout en assurant un bon écoulement des jus et des condensats vers l'extrémité inférieure ouverte. Ces dispositions permettent de minimiser les contraintes géométriques sur la face intérieure de la paroi latérale tubulaire, et de limiter l'exposition de la face intérieure de la paroi latérale tubulaire aux jus et/ou aux condensats. Les contraintes internes issues de moulage peuvent être minimisées dans la paroi latérale tubulaire. L'élément de cuisson proposé favorise l'écoulement des liquides le long de la face intérieure de la paroi latérale tubulaire en limitant leur rétention au niveau des zones d'appui du fond amovible. Ces dispositions contribuent ainsi à limiter la formation de fissures dans la matière de la paroi latérale tubulaire réalisée en matériau plastique appartenant à la famille des copolyesters.

Ces objets sont atteints avec un élément de cuisson pour cuiseur vapeur, comportant une paroi latérale tubulaire présentant une extrémité inférieure ouverte ainsi qu'un fond amovible monté à l'intérieur de la paroi latérale tubulaire, le fond amovible présentant des zones d'appui ménageant des passages d'écoulement avec une face intérieure de la paroi latérale tubulaire, du fait que la paroi latérale tubulaire est réalisée en matériau plastique appartenant à la famille des copolyesters, et que chaque zone d'appui du fond amovible est formée par une protubérance reposant sur une portion inclinée de la face intérieure de la paroi latérale tubulaire déversant vers l'extrémité inférieure ouverte de la paroi latérale tubulaire. Ces dispositions permettent de réduire ou de supprimer à l'intérieur de la paroi latérale tubulaire les conformations spécifiques prévues pour le support du fond amovible, tout en assurant un bon écoulement des jus et des condensats vers l'extrémité inférieure ouverte. Ces dispositions permettent de minimiser les contraintes géométriques sur la face intérieure de la paroi latérale tubulaire, et de limiter l'exposition de la face intérieure de la paroi latérale tubulaire aux jus et/ou aux condensats. Ces dispositions contribuent ainsi à limiter la formation de fissures dans la matière de la paroi latérale tubulaire. Une paroi latérale tubulaire en polycarbonate, contenant du bisphénol A, peut ainsi être remplacée par une paroi latérale tubulaire réalisée dans une autre matière plastique transparente, mais dépourvue de bisphénol A, à moindre coût.

Avantageusement, la face intérieure de la paroi latérale tubulaire est dépourvue de rayons inférieurs à 0,9 mm, et de préférence dépourvue de rayons inférieurs à 1 mm. Les rayons présents sur la surface de la paroi latérale tubulaire créent des contraintes perturbant l'écoulement de la matière lors de l'injection. La face intérieure de la paroi latérale tubulaire est exposée à la chaleur de la vapeur et aux matières alimentaires. Une taille de rayon minimale appropriée permet de diminuer les contraintes dans la matière de la paroi latérale tubulaire et de favoriser l'écoulement des jus ou des condensats, ce qui permet de retarder voire d'éviter l'apparition de fissures dans la matière de la paroi latérale tubulaire.

Avantageusement alors, les rayons de la face intérieure de la paroi latérale tubulaire sont supérieurs ou égaux à 2 mm, et de préférence supérieurs ou égaux à 2,5 mm.

Avantageusement encore, la paroi latérale tubulaire présente une face extérieure dépourvue de rayons inférieurs à 0,9 mm, et de préférence dépourvue de rayons inférieurs à 1 mm.

Avantageusement encore, la paroi latérale tubulaire comporte un montant présentant une extrémité supérieure prolongée par une bordure annulaire extérieure. Cette disposition permet de rigidifier la partie supérieure de la paroi latérale tubulaire. Cette disposition permet également de former un organe de préhension facilitant le déplacement de l'élément de cuisson.

Avantageusement encore, la paroi latérale tubulaire est dépourvue de rayons inférieurs à 0,9 mm, et de préférence dépourvue de rayons inférieurs à 1 mm. Il est en effet préférable d'éviter les angles vifs tant à l'extérieur qu'à l'intérieur de la paroi latérale tubulaire, ceux-ci étant générateurs de contraintes lors de la réalisation de la pièce. Les rayons favorisent le remplissage de la pièce et réduisent, voire suppriment, les contraintes dans la matière.

Avantageusement encore la paroi latérale tubulaire présente une épaisseur sensiblement constante. Cette disposition facilite le remplissage du moule lors de la réalisation de la paroi latérale tubulaire, ce qui permet de diminuer les contraintes dans la matière.

Avantageusement encore, la paroi latérale tubulaire présente une épaisseur comprise entre 3 et 5 mm, et de préférence entre 3,5 mm et 4,5 mm. Ces gammes d'épaisseur permettent d'obtenir une résistance mécanique suffisante de la paroi latérale tubulaire, tout en optimisant les conditions d'injection.

Avantageusement encore, l'inclinaison de chaque portion inclinée déversant vers l'extrémité inférieure ouverte de la paroi latérale tubulaire est comprise entre 4° et 20° par rapport à un plan de référence horizontal, et de préférence comprise entre 5° et 15° par rapport à un plan de référence horizontal. Cette disposition permet de favoriser l'écoulement des jus ou des condensats et d'éviter leur stagnation sur la face intérieure de la paroi latérale tubulaire, avec une bonne stabilité du fond amovible monté à l'intérieur de la paroi latérale tubulaire.

Avantageusement encore, chaque passage d'écoulement présente une hauteur au moins égale à 1 mm, et de préférence au moins égale à 1,4 mm. Cette disposition permet de favoriser l'écoulement des jus ou des condensats, même un peu épais et/ou chargés de matières.

Avantageusement encore, chaque zone d'appui présente une largeur circonférentielle au plus égale à 5 mm entre deux passages d'écoulement adjacents. Cette disposition permet d'éviter la rétention des jus ou des condensats au niveau des zones d'appui du fond amovible.

Selon une forme de réalisation avantageuse, le fond amovible comporte au moins une languette élastique présentant une face supérieure de retenue en prise avec la paroi latérale tubulaire lorsque le fond amovible est monté à l'intérieur de la paroi latérale tubulaire. Ainsi la paroi latérale tubulaire est maintenue entre les zones d'appui du fond amovible et la face supérieure de retenue de la languette élastique du fond amovible. Cette disposition permet d'obtenir un fond amovible relié à la paroi latérale tubulaire.

Avantageusement alors, la face supérieure de retenue vient en appui contre la paroi latérale tubulaire lorsque le fond amovible est monté à l'intérieur de la paroi latérale tubulaire. Ainsi la paroi latérale tubulaire est maintenue serrée entre les zones d'appui du fond amovible et la face supérieure de retenue de la languette élastique du fond amovible. Cette disposition permet d'obtenir un fond amovible fixé à la paroi latérale tubulaire.

Avantageusement encore, la languette élastique présente une face inférieure d'insertion prolongée par la face supérieure de retenue, la face inférieure d'insertion reposant sur la face intérieure de la paroi latérale tubulaire lorsque le fond amovible est mis en place dans la paroi latérale tubulaire, la face inférieure d'insertion pouvant glisser sur la face intérieure de la paroi latérale tubulaire pour amener la face supérieure de retenue en prise avec la paroi latérale tubulaire. Ainsi le fond amovible peut être mis en place à l'intérieur de la paroi latérale tubulaire, sans qu'il soit nécessaire de manipuler la languette élastique.

Avantageusement encore, le fond amovible présente deux languettes élastiques agencées de manière opposée. Une telle disposition est suffisante pour maintenir le fond amovible en place dans la paroi latérale tubulaire, et facilite le retrait du fond amovible.

Ces objets sont atteints également avec un appareil électrique de cuisson à la vapeur, comportant une base chauffante pour produire de la vapeur et un élément de cuisson porté et alimenté en vapeur par la base chauffante, dans lequel ledit élément de cuisson est conforme à l'une au moins des caractéristiques précitées.

L'invention sera mieux comprise à l'étude d'un exemple de réalisation et d'une variante, pris à titre nullement limitatifs, illustrés dans les figures annexées, dans lesquelles :
- la figure 1 est une vue en perspective et en coupe d'une paroi latérale tubulaire appartenant à un élément de cuisson selon l'invention,
- la figure 2 est une vue en perspective retournée d'un fond amovible utilisé avec la paroi latérale tubulaire illustrée sur la figure 1 pour former un élément de cuisson selon l'invention,
- la figure 3 est une vue en perspective et en coupe montrant le fond amovible illustré sur la figure 2 assemblé avec la paroi latérale tubulaire illustrée sur la figure 1 pour former un élément de cuisson selon l'invention,
- la figure 4 est une vue en perspective et en coupe d'un appareil électrique de cuisson à la vapeur comportant l'élément de cuisson selon l'invention illustré sur la figure 3 disposé sur une base chauffante,
- la figure 5 est une vue en perspective et en coupe d'une variante de réalisation de l'élément de cuisson selon l'invention illustré sur la figure 3,
- la figure 6 est une vue en perspective de dessous d'un fond amovible appartenant à l'élément de cuisson selon l'invention illustré sur la figure 5.

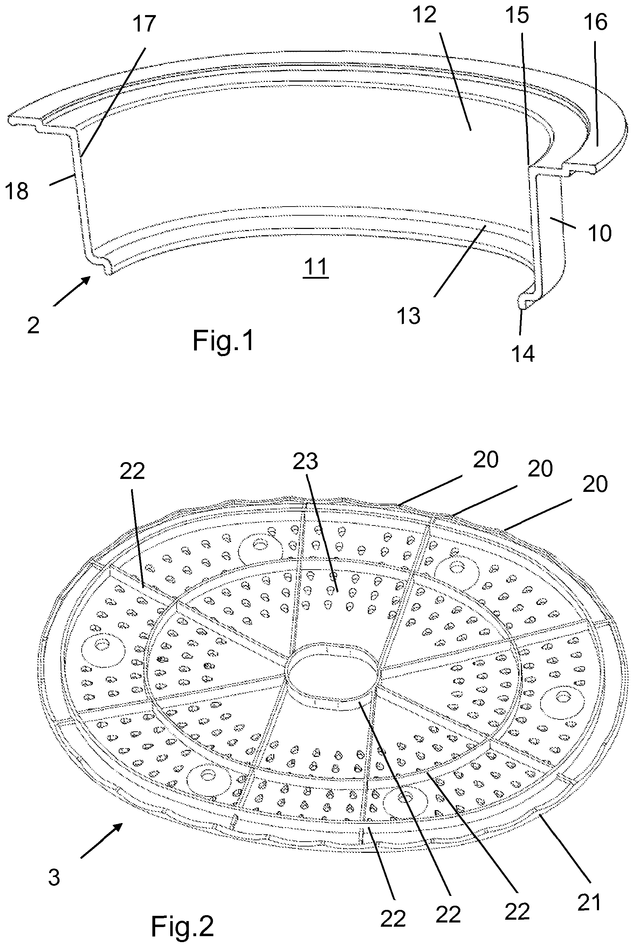

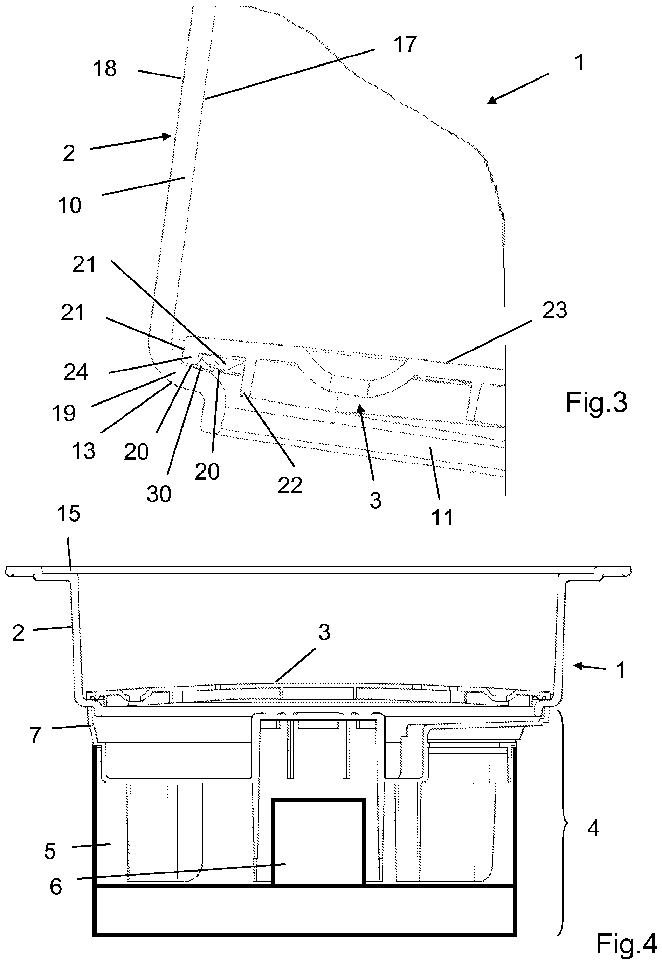

Un élément de cuisson 1 pour cuiseur vapeur selon l'invention est illustré sur les figures 1 à 3. L'élément de cuisson 1 comprend une paroi latérale tubulaire 2, illustrée sur les figures 1 et 3, ainsi qu'un fond amovible 3, illustré sur les figures 2 et 3.

La paroi latérale tubulaire 2 présente une face intérieure 17 et une face extérieure 18. La paroi latérale tubulaire 2 présente une extrémité inférieure ouverte 11, ainsi qu'une extrémité supérieure ouverte.

Plus particulièrement dans l'exemple de réalisation illustré sur les figures 1 et 3, la paroi latérale tubulaire 2 comporte un montant 10 présentant une partie principale 12 prolongée par un décrochement inférieur 13. Le montant 10 présente une extrémité inférieure 14 et une extrémité supérieure 15. L'extrémité inférieure 14 du montant 10 forme une couronne délimitant une ouverture inférieure. Ainsi l'extrémité inférieure 14 du montant 10 est sensiblement parallèle à la partie principale 12 du montant 10. L'extrémité inférieure 14 prolonge le décrochement inférieur 13. L'extrémité supérieure 15 du montant 10 forme une couronne délimitant une ouverture supérieure. L'extrémité supérieure 15 du montant 10 est prolongée par une bordure annulaire extérieure 16. L'extrémité supérieure 15 appartient à la partie principale 12 du montant 10. La bordure annulaire extérieure 16 est exposée à la température ambiante, et non à la température régnant à l'intérieur de la paroi latérale tubulaire 2, ce qui permet d'augmenter la résistance mécanique de la bordure annulaire extérieure 16.

La paroi latérale tubulaire 2 est réalisée en matériau plastique appartenant à la famille des copolyesters, tel que notamment le Tritan^{™} (copolyester fabriqué par la société Eastman). Ces matières présentent l'avantage d'offrir une bonne transparence, d'être peu sensibles au tâchage par les aliments, d'être peu sensibles à l'hydrolyse, et d'être exemptes de bisphénol A.

La face intérieure 17 de la paroi latérale tubulaire 2 est dépourvue de rayons inférieurs à 0,9 mm, et de préférence dépourvue de rayons inférieurs à 1 mm. Pour diminuer les contraintes dans la matière lors de son injection, les rayons de la face intérieure 17 de la paroi latérale tubulaire 2 sont supérieurs ou égaux à 2 mm, et de préférence supérieurs ou égaux à 2,5 mm. Le rayon entre la partie principale 12 et le décrochement inférieur 13 du montant 10 est par exemple égal à 3,3 mm; le rayon entre le décrochement inférieur 13 et l'extrémité inférieure 14 du montant 10 est par exemple égal à 5,9 mm.

La face extérieure 18 de la paroi latérale tubulaire 2 est dépourvue de rayons inférieurs à 0,9 mm, et de préférence dépourvue de rayons inférieurs à 1 mm. Le rayon le plus faible se situe entre le décrochement inférieur 13 et l'extrémité inférieure 14 du montant 10, ce rayon est par exemple égal à 1 mm. Le rayon entre la partie principale 12 et le décrochement inférieur 13 du montant 10 est plus important, par exemple égal à 3,1 mm.

De préférence, la paroi latérale tubulaire 2 est dépourvue de rayons inférieurs à 0,9 mm, et de préférence dépourvue de rayons inférieurs à 1 mm, y compris entre la partie principale 12 et la bordure annulaire extérieure 16. Les rayons raccordant les deux parties de la bordure annulaire extérieure sont par exemple compris entre 1 et 1,2 mm. Ainsi la paroi latérale tubulaire 2 est dépourvue de zones à angles droits.

Pour faciliter l'injection de la matière, la paroi latérale tubulaire 2 présente une épaisseur sensiblement constante. L'injection de la matière peut notamment être effectuée en deux points opposés au niveau de la bordure annulaire extérieure 16, pour éviter que les points d'injection soient exposés au flux de vapeur lors de l'utilisation de l'élément de cuisson 1.

La paroi latérale tubulaire 2 présente avantageusement une épaisseur comprise entre 3 et 5 mm, et de préférence entre 3,5 mm et 4,5 mm. Dans l'exemple de réalisation illustré sur les figures 1 et 3, l'épaisseur de la paroi latérale tubulaire 2 est de 4 mm.

L'épaisseur de la paroi latérale tubulaire 2 notamment au niveau du décrochement inférieur 13 et de la bordure annulaire extérieure 16 permet de repousser la température limite d'utilisation de matériaux plastiques présentant des propriétés mécaniques limitées, en contrôlant mieux le flambage sous charge de la paroi latérale tubulaire 2.

Le fond amovible 3 présente des zones d'appui 20 prévues pour reposer sur la paroi latérale tubulaire 2 en ménageant des passages d'écoulement 30 pour les jus et les condensats avec la face intérieure 17 de la paroi latérale tubulaire 2, de manière à limiter la présence de matière alimentaire sur la face intérieure 17 en favorisant son écoulement.

Dans l'exemple de réalisation illustré sur les figures 2 et 3, les zones d'appui 20 sont ménagées sur une bordure inférieure 21 du fond amovible 3. La bordure inférieure 21 est agencée sur la périphérie du fond amovible 3. Le fond amovible 3 comporte des nervures inférieures de renfort 22, par exemple annulaires ou sensiblement radiales. Le fond amovible 3 n'est pas nécessairement transparent et peut par exemple être réalisé en polypropylène.

Le fond amovible 3 représenté sur les figures 2 et 3 est perforé. Plus particulièrement, le fond amovible 3 forme un plateau 23 présentant une surface perforée.

Tel que représenté sur la figure 3, le fond amovible 3 est monté à l'intérieur de la paroi latérale tubulaire 2. Les zones d'appui 20 du fond amovible 3 reposent sur la face intérieure 17 de la paroi latérale tubulaire 2 et ménagent les passages d'écoulement 30 vers l'extrémité inférieure ouverte 11. Ainsi les zones d'appui 20 sont espacées.

Chaque zone d'appui 20 du fond amovible 3 est formée par une protubérance 24 reposant sur une portion inclinée 19 de la face intérieure 17 de la paroi latérale tubulaire 2 déversant vers l'extrémité inférieure ouverte 11 de la paroi latérale tubulaire 2. En d'autres termes, les portions inclinées 19 de la face intérieure 17 portant les zones d'appui du fond amovible 3 présentent une pente descendante orientée vers l'extrémité inférieure ouverte 11, pour permettre l'écoulement des jus et des condensats par les passages d'écoulement 30 vers l'extrémité inférieure ouverte 11, en limitant la création de formes spécifiques générant des contraintes dans la matière lors du moulage de la paroi latérale tubulaire 2. Ainsi chaque portion inclinée 19 est déversante vers l'extrémité inférieure ouverte 11 de la paroi latérale tubulaire 2.

De préférence, les portions inclinées 19 appartiennent au décrochement inférieur 13. La face intérieure 17 présente ainsi un profil de pente variable en direction de l'extrémité inférieure ouverte 11 au niveau du décrochement inférieur 13. Pour faciliter l'écoulement des jus et des condensats, la face intérieure 17 est déversante vers l'extrémité inférieure ouverte 11 de la paroi latérale tubulaire 2 y compris au niveau du décrochement inférieur 13. En d'autres termes, la face intérieure 17 présente toujours une inclinaison vers l'extrémité inférieure ouverte 11, par rapport à un plan de référence horizontal. Ce plan de référence horizontal peut notamment être défini par la face extérieure 18 de la paroi latérale tubulaire 2 au niveau du décrochement inférieur 13.

Chaque portion inclinée 19 déversant vers l'extrémité inférieure ouverte 11 de la paroi latérale tubulaire 2 présente par exemple une inclinaison de 5° par rapport au plan de référence horizontal. Dans l'exemple de réalisation illustré sur les figures, le décrochement inférieur 13 présente une zone supérieure plane déversante vers l'extrémité inférieure ouverte 11. Toutefois chaque portion inclinée 19 n'est pas nécessairement ménagée dans une zone plane de la face intérieure 17 de la paroi latérale tubulaire 2. Les portions inclinées 19 peuvent présenter si désiré un profil concave, notamment dans la partie inférieure du décrochement inférieur 13 s'étendant en direction de l'extrémité inférieure 14 du montant 10, ou un profil convexe, notamment dans la partie supérieure du décrochement inférieur 13 s'étendant en direction de la partie principale 12 du montant 10.

De préférence, la face intérieure 17 de la paroi latérale tubulaire 2 présente un profil de pente identique sur toute la circonférence du décrochement inférieur 13. Ainsi les portions inclinées 19 présentent un profil de pente uniforme dans la direction transversale. Les portions inclinées 19 portant les zones d'appui 20 du fond amovible 3 sont ainsi exemptes de bossages, ce qui favorise l'obtention d'une épaisseur plus uniforme pour la paroi latérale tubulaire 2. Les portions inclinées 19 portant les zones d'appui 20 du fond amovible 3 sont aussi exemptes de cavités, ce qui contribue à l'obtention d'une épaisseur plus uniforme pour la paroi latérale tubulaire 2. L'écoulement de la matière lors du moulage de la paroi latérale tubulaire 2 est ainsi facilité.

Les zones d'appui 20 sont réparties autour de l'extrémité inférieure ouverte 11. Tel que représenté sur la figure 2, le fond amovible 3 comporte 30 zones d'appui 20. Les zones d'appui 20 sont avantageusement réparties de manière régulière.

Chaque zone d'appui 20 présente une largeur circonférentielle avantageusement au plus égale à 5 mm entre deux passages d'écoulement 30 adjacents, et de préférence comprise entre 0,5 et 1,5 mm. La largeur circonférentielle de chaque zone d'appui est par exemple égale à 0,85 mm.

L'espace entre deux zones d'appui 20 adjacentes définissant la largeur d'un passage d'écoulement 30 est de préférence supérieur à la largeur circonférentielle de chacune des zones d'appui 20, pour favoriser l'écoulement des jus et des condensats.

La longueur radiale des zones d'appui 20 est de préférence supérieure à la largeur des zones d'appui 20, pour obtenir une surface d'appui suffisante en minimisant les obstacles à l'écoulement des jus et des condensats. La longueur radiale des zones d'appui 20 est par exemple comprise entre 1 et 3 mm.

Chaque passage d'écoulement 30 présente avantageusement une hauteur au moins égale à 1 mm, et de préférence au moins égale à 1,4 mm. La hauteur de chaque passage d'écoulement 30 est par exemple égale à 1,5 mm.

La figure 4 illustre un appareil électrique de cuisson à la vapeur comportant une base chauffante 4 pour produire de la vapeur et un élément de cuisson 1 porté et alimenté en vapeur par la base chauffante 4.

Plus particulièrement tel que représenté sur la figure 4, l'élément de cuisson 1 repose sur la base chauffante 4. Ainsi l'élément de cuisson 1 est porté directement par la base chauffante 4. La paroi latérale tubulaire 2 repose sur la base chauffante 4 au niveau du décrochement inférieur 13 de la face extérieure 18 de la paroi latérale tubulaire 2.

La base chauffante 4 comporte un réservoir d'eau 5 associé à un dispositif de production de vapeur 6 comprenant par exemple une résistance électrique chauffante. La base chauffante 4 comporte avantageusement un récipient récupérateur de jus 7 disposé sous le fond amovible 3 perforé.

Un autre élément de cuisson ou un couvercle peut être disposé sur l'extrémité supérieure 15 du montant 10.

L'élément de cuisson 1 illustré sur les figures 1 à 4 disposé sur la base chauffante 4 illustrée sur la figure 4 s'utilise et fonctionne de la manière suivante. L'utilisateur dispose l'élément de cuisson 1 sur la base chauffante 4, et place les aliments à cuire sur le fond amovible 3. Les aliments peuvent être disposés directement sur le fond amovible 3. Les aliments peuvent aussi être portés par un support disposé sur le fond amovible 3. La vapeur atteint l'espace au dessus du fond amovible 3 pour cuire les aliments en traversant les perforations du plateau 23 et/ou en passant par les passages d'écoulement 30. Les jus ou les condensats ruisselant sur la face intérieure 17 de la paroi latérale tubulaire 2 sont évacués par les passages d'écoulement 30. La pente des portions inclinées 19 permet d'éviter la stagnation des jus ou des condensats contre les protubérances 24 du fond amovible 3. La face intérieure 17 de la paroi latérale tubulaire 2 est ainsi peu exposée aux jus et aux condensats, ce qui contribue à une meilleure durabilité de la paroi latérale tubulaire 2.

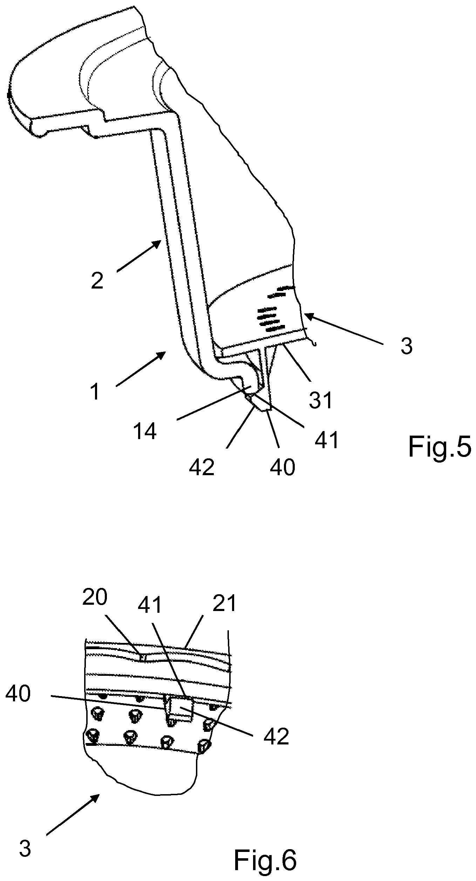

Les figures 5 et 6 illustrent une variante de réalisation de l'élément de cuisson illustré sur les figures 1 à 4, dans laquelle le fond amovible 3 comporte au moins une languette élastique 40 de retenue.

Dans la variante de réalisation illustrée sur les figures 5 et 6, la languette élastique 40 est issue d'une face inférieure 31 du fond amovible 3.

La languette élastique 40 présente une face supérieure de retenue 41 en prise avec la paroi latérale tubulaire 2 lorsque le fond amovible 3 est monté à l'intérieur de la paroi latérale tubulaire 2. Le déplacement du fond amovible 3 à l'intérieur de la paroi latérale tubulaire 2 est ainsi limité vers le haut par la languette élastique 40 et vers le bas par les zones d'appui 20.

Plus particulièrement, tel que représenté sur la figure 5, la face supérieure de retenue 41 vient en appui contre la paroi latérale tubulaire 2 lorsque le fond amovible 3 est monté sur la paroi latérale tubulaire 2.

Dans la variante de réalisation illustrée sur les figures 5 et 6, la face supérieure de retenue 41 est agencée en regard de l'extrémité inférieure 14 du montant 10 lorsque le fond amovible 3 est monté à l'intérieur de la paroi latérale tubulaire 2. Cette disposition permet d'éviter la création d'une conformation spécifique dans la partie inférieure de la paroi latérale tubulaire 2. De préférence, la face supérieure de retenue 41 vient en appui contre l'extrémité inférieure 14 de la paroi latérale tubulaire 2 lorsque le fond amovible 3 est monté sur la paroi latérale tubulaire 2.

Selon une forme de réalisation préférée, la languette élastique 40 présente une face inférieure d'insertion 42 prolongée par la face supérieure de retenue 41. La face inférieure d'insertion 42 repose sur la face intérieure 17 de la paroi latérale tubulaire 2 lorsque le fond amovible 3 est mis en place dans la paroi latérale tubulaire 2. La face inférieure d'insertion 42 peut glisser sur la face intérieure 17 de la paroi latérale tubulaire 2 pour amener la face supérieure de retenue 41 en regard de la partie inférieure de la paroi latérale tubulaire 2 par simple appui sur le fond amovible 3, sans nécessiter de manipulation spécifique de la languette élastique 40. La face supérieure de retenue 41 vient ainsi en prise avec l'extrémité inférieure 14 du montant 10.

De manière préférée, le fond amovible 3 présente deux languettes élastiques 40 agencées de manière opposée.

Un élément de cuisson 1 de construction économique comportant un fond amovible 3 solidaire ou non d'une paroi latérale tubulaire 2 peut ainsi être obtenu, avec une paroi latérale tubulaire 2 réalisée en matériau transparent présentant un caractère durable.

La paroi latérale tubulaire 2 est de préférence dépourvue d'angles. Toutefois la paroi latérale tubulaire 2 n'est pas nécessairement ovale. La paroi latérale tubulaire 2 peut notamment être ronde ou rectangulaire à coins arrondis.

A titre de variante, l'élément de cuisson 1 n'est pas nécessairement porté directement par la base chauffante 4. Notamment au moins un autre élément tubulaire peut être intercalé entre la base chauffante 4 et l'élément de cuisson 1, pour alimenter l'élément de cuisson 1 en vapeur à partir de la base chauffante 4.

A titre de variante, l'extrémité inférieure ouverte 11 de la paroi latérale tubulaire 2 ne présente pas nécessairement une seule ouverture inférieure. La paroi latérale tubulaire 2 pourrait par exemple comporter une ou plusieurs traverses reliant différentes portions de la partie inférieure du montant 10.

A titre de variante, l'inclinaison des portions inclinées 19 de la face intérieure 17 du montant 10 peut être un peu inférieure à 5° par rapport au plan de référence horizontal, ou au contraire supérieure à 5° par rapport au plan de référence horizontal, et atteindre par exemple 15 à 20°, voire davantage. Avantageusement, l'inclinaison de chaque portion inclinée 19 déversant vers l'extrémité inférieure ouverte 11 de la paroi latérale tubulaire 2 est comprise entre 4° et 20° par rapport à un plan de référence horizontal. Toutefois une inclinaison plus faible, de préférence d'au plus 15° par rapport au plan de référence horizontal, permet une meilleure stabilité du fond amovible 3 porté par la paroi latérale tubulaire 2. Ainsi de préférence l'inclinaison de chaque portion inclinée 19 déversant vers l'extrémité inférieure ouverte 11 de la paroi latérale tubulaire 2 est comprise entre 5° et 15° par rapport au plan de référence horizontal. Cette disposition permettant d'obtenir une rigidification satisfaisante de la partie inférieure du montant 10 et une stabilité satisfaisante du fond amovible 3 porté par la paroi latérale tubulaire 2, tout en favorisant un bon écoulement des jus et des condensats, est ainsi préférée.

De préférence, le fond amovible 3 comporte au moins trois zones d'appui 20. Toutefois un nombre plus élevé de zones d'appui 20 permet de mieux répartir la charge du fond amovible 3 sur les portions inclinées 19 de la face intérieure 17 de la paroi latérale tubulaire 2.

A titre de variante, le fond amovible 3 n'est pas nécessairement perforé. Le fond amovible 3 peut notamment appartenir à un récipient de cuisson, fermé par un couvercle, ou non.

A titre de variante, la face supérieure de retenue 41 ne vient pas nécessairement en appui contre l'extrémité inférieure 14 du montant 10 lorsque le fond amovible 3 est monté à l'intérieur de la paroi latérale tubulaire 2.

La présente invention n'est nullement limitée aux exemples de réalisation décrits et à leurs variantes, mais englobe de nombreuses modifications dans le cadre des revendications.

## Revendications

1. Élément de cuisson (1) pour cuiseur vapeur, comportant une paroi latérale tubulaire (2) présentant une extrémité inférieure ouverte (11) ainsi qu'un fond amovible (3) monté à l'intérieur de la paroi latérale tubulaire (2), la paroi latérale tubulaire (2) étant réalisée en matériau plastique appartenant à la famille des copolyesters, le fond amovible (3) présentant des zones d'appui (20) espacées **caractérisé en ce que** les zones d'appui espacées (20) ménagent des passages d'écoulement (30) avec une face intérieure (17) de la paroi latérale tubulaire (2), et **en ce que** chaque zone d'appui (20) du fond amovible (3) est formée par une protubérance (24) reposant sur une portion inclinée (19) de la face intérieure (17) de la paroi latérale tubulaire (2) déversant vers l'extrémité inférieure ouverte (11) de la paroi latérale tubulaire (2).

2. Élément de cuisson (1) selon la revendication 1, **caractérisé en ce que** la face intérieure (17) de la paroi latérale tubulaire (2) est dépourvue de rayons inférieurs à 0,9 mm, et de préférence dépourvue de rayons inférieurs à 1 mm.

3. Élément de cuisson (1) selon la revendication 2, **caractérisé en ce que** les rayons de la face intérieure (17) de la paroi latérale tubulaire (2) sont supérieurs ou égaux à 2 mm, et de préférence supérieurs ou égaux à 2, 5 mm.

4. Élément de cuisson (1) selon l'une des revendications 1 à 3, **caractérisé en ce que** la paroi latérale tubulaire (2) présente une face extérieure (18) dépourvue de rayons inférieurs à 0,9 mm, et de préférence dépourvue de rayons inférieurs à 1 mm.

5. Élément de cuisson (1) selon l'une des revendications 1 à 4, **caractérisé en ce que** la paroi latérale tubulaire (2) comporte un montant (10) présentant une extrémité supérieure (15) prolongée par une bordure annulaire extérieure (16).

6. Élément de cuisson (1) selon l'une des revendications 1 à 5, **caractérisé en ce que** la paroi latérale tubulaire (2) présente une épaisseur sensiblement constante.

7. Élément de cuisson (1) selon l'une des revendications 1 à 6 **caractérisé en ce que** la paroi latérale tubulaire (2) présente une épaisseur comprise entre 3 et 5 mm, et de préférence entre 3.5 mm et 4.5 mm.

8. Élément de cuisson (1) selon l'une des revendications 1 à 7, **caractérisé en ce que** l'inclinaison de chaque portion inclinée (19) déversant vers l'extrémité inférieure ouverte (11) de la paroi latérale tubulaire (2) est comprise entre 4° et 20° par rapport à un plan de référence horizontal, et de préférence comprise entre 5° et 15° par rapport à un plan de référence horizontal.

9. Élément de cuisson (1) selon l'une des revendications 1 à 8, **caractérisé en ce que** chaque passage d'écoulement (30) présente une hauteur au moins égale à 1 mm, et de préférence au moins égale à 1,4 mm.

10. Élément de cuisson (1) selon l'une des revendications 1 à 9, **caractérisé en ce que** chaque zone d'appui (20) présente une largeur circonférentielle au plus égale à 5 mm entre deux passages d'écoulement (30) adjacents.

11. Élément de cuisson (1) selon l'une des revendications 1 à 10, **caractérisé en ce que** le fond amovible (3) comporte au moins une languette élastique (40) présentant une face supérieure de retenue (41) en prise avec la paroi latérale tubulaire (2) lorsque le fond amovible (3) est monté à l'intérieur de la paroi latérale tubulaire (2).

12. Élément de cuisson (1) selon la revendication 11, **caractérisé en ce que** la face supérieure de retenue (41) vient en appui contre la paroi latérale tubulaire (2) lorsque le fond amovible (3) est monté à l'intérieur de la paroi latérale tubulaire (2).

13. Élément de cuisson (1) selon l'une des revendications 11 ou 12, **caractérisé en ce que** la languette élastique (40) présente une face inférieure d'insertion (42) prolongée par la face supérieure de retenue (41), **en ce que** la face inférieure d'insertion (42) repose sur la face intérieure (17) de la paroi latérale tubulaire (2) lorsque le fond amovible (3) est mis en place dans la paroi latérale tubulaire (2), et **en ce que** la face inférieure d'insertion (42) peut glisser sur la face intérieure (17) de la paroi latérale tubulaire (2) pour amener la face supérieure de retenue (41) en prise avec la paroi latérale tubulaire (2).

14. Élément de cuisson (1) selon l'une des revendications 11 à 13, **caractérisé en ce que** le fond amovible (3) présente deux languettes élastiques (40) agencées de manière opposée.

15. Appareil électrique de cuisson à la vapeur, comportant une base chauffante (4) pour produire de la vapeur et un élément de cuisson (1) porté et alimenté en vapeur par la base chauffante (4), **caractérisé en ce que** l'élément de cuisson (1) est conforme à l'une des revendications 1 à 14.

## Patentansprüche

1. Garbehälter (1) für einen Dampfgarer mit einer rohrförmigen Seitenwand (2), der über ein offenes unteres Ende (11) sowie einen abnehmbaren Boden (3) verfügt, der innen an der rohrförmigen Seitenwand (2) angebracht ist, wobei die rohrförmige Seitenwand (2) aus einem Kunststoffmaterial aus der Familie der Copolyester besteht und der abnehmbare Boden (3) über mit Abstand angeordnete Abstützzonen (20) verfügt, **dadurch gekennzeichnet, dass** die mit Abstand angeordneten Abstützzonen (20) mit einer Innenseite (17) der rohrförmigen Seitenwand (2) Strömungsdurchlässe (30) bilden, und dass jede Abstützzone (20) des abnehmbaren Bodens (3) durch eine Erhebung (24) gebildet wird, die auf einem geneigten Teil (19) der Innenseite (17) der rohrförmigen Seitenwand (2) auffliegt, der zum offenen unteren Ende (11) der rohrförmigen Seitenwand (2) abfällt.

2. Garbehälter (1) nach Anspruch 1, **dadurch gekennzeichnet, dass** die Innenseite (17) der rohrförmigen Seitenwand (2) keine Radien von unter 0,9 mm und vorzugsweise keine Radien von unter 1 mm aufweist.

3. Garbehälter (1) nach Anspruch 2, **dadurch gekennzeichnet, dass** die Radien der Innenseite (17) der rohrförmigen Seitenwand (2) mindestens 2 mm und vorzugsweise mindestens 2, 5 mm betragen.

4. Garbehälter (1) nach einem der Ansprüche 1 bis 3, **dadurch gekennzeichnet, dass** die rohrförmige Seitenwand (2) eine Außenwand (18) besitzt, die keine Radien von unter 0,9 mm und vorzugsweise keine Radien von unter 1 mm aufweist.

5. Garbehälter (1) nach einem der Ansprüche 1 bis 4, **dadurch gekennzeichnet, dass** die rohrförmige Seitenwand (2) einen Standkörper (10) aufweist, der über ein oberes Ende (15) verfügt, das durch einen ringförmigen Außenrand (16) verlängert wird.

6. Garbehälter (1) nach einem der Ansprüche 1 bis 5, **dadurch gekennzeichnet, dass** die rohrförmige Seitenwand (2) eine im Wesentlichen gleichmäßige Dicke aufweist.

7. Garbehälter (1) nach einem der Ansprüche 1 bis 6, **dadurch gekennzeichnet, dass** die rohrförmige Seitenwand (2) eine Dicke aufweist, die zwischen 3 und 5 mm und vorzugsweise zwischen 3,5 mm und 4,5 mm liegt.

8. Garbehälter (1) nach einem der Ansprüche 1 bis 7, **dadurch gekennzeichnet, dass** die Neigung jedes geneigten Teils (19), der zum offenen unteren Ende (11) der rohrförmigen Seitenwand (2) abfällt, in Bezug auf eine horizontale Referenzebene zwischen 4° und 20° und in Bezug auf eine horizontale Referenzebene vorzugsweise zwischen 5° und 15° liegt.

9. Garbehälter (1) nach einem der Ansprüche 1 bis 8, **dadurch gekennzeichnet, dass** jeder Strömungsdurchlass (30) mindestens 1 mm hoch und vorzugsweise mindestens 1,4 mm hoch ist.

10. Garbehälter (1) nach einem der Ansprüche 1 bis 9, **dadurch gekennzeichnet, dass** jede Abstützzone (20) zwischen zwei nebeneinander liegenden Strömungsdurchlässen (30) einen Umfang von mindestens 5 mm aufweist.

11. Garbehälter (1) nach einem der Ansprüche 1 bis 10, **dadurch gekennzeichnet, dass** der abnehmbare Boden (3) mindestens eine federnde Zunge (40) aufweist, die über eine Oberseite (41) mit Rückhaltewirkung verfügt, die mit der rohrförmigen Seitenwand (2) im Eingriff ist, wenn der abnehmbare Boden (3) innen an der rohrförmigen Seitenwand (2) angebracht ist.

12. Garbehälter (1) nach Anspruch 11, **dadurch gekennzeichnet, dass** die Oberseite (41) mit Rückhaltewirkung an der rohrförmigen Seitenwand (2) anliegt, wenn der abnehmbare Boden (3) innen an der rohrförmigen Seitenwand (2) angebracht wird.

13. Garbehälter (1) nach einem der Ansprüche 11 bis 12, **dadurch gekennzeichnet, dass** die federnde Zunge (40) eine Unterseite (42) zum Einsetzen aufweist, die durch die Oberseite (41) mit Rückhaltewirkung verlängert wird, und dass die Unterseite (42) zum Einsetzen auf der Innenseite (17) der rohrförmigen Seitenwand (2) aufliegt, wenn der abnehmbare Boden (3) in die rohrförmige Seitenwand (2) eingesetzt wird, und dadurch, dass die Unterseite (42) zum Einsetzen auf die Innenseite (17) der rohrförmigen Seitenwand (2) gleiten kann, um die Oberseite (41) mit Rückhaltewirkung mit der rohrförmigen Seitenwand (2) in Eingriff zu bringen.

14. Garbehälter (1) nach einem der Ansprüche 11 bis 13, **dadurch gekennzeichnet, dass** der abnehmbare Boden (3) zwei federnde Zungen (40) aufweist, die sich gegenüber liegen.

15. Elektrogerät zum Dampfgaren, das einen Heizsockel (4), um Dampf zu erzeugen, und einen Garbehälter (1) aufweist, der auf dem Heizsockel (4) ruht und von ihm mit Dampf versorgt wird, **dadurch gekennzeichnet, dass** der Garbehälter (1) einem der Ansprüche 1 bis 14 entspricht.

## Claims

1. Cooking element (1) for steam cooker, comprising a tubular side wall (2) having an open lower end (11) and a removable bottom (3) mounted inside the tubular side wall (2), the tubular side wall (2) being made of plastic material belonging to the family of copolyesters, the removable bottom (3) having separate bearing areas (20) **characterised in that** the separate bearing areas (20) form flow passages (30) with an inner side (17) of the tubular side wall (2), and **in that** each bearing area (20) of the removable bottom (3) is formed by a protuberance (24) resting on an inclined portion (19) of the inner side (17) of the tubular side wall (2) flowing towards the open lower end (11) of the tubular side wall (2).

2. Cooking element (1) according to claim 1, **characterised in that** the inner side (17) of the tubular side wall (2) has no radii less than 0.9 mm, and preferably no radii less than 1 mm.

3. Cooking element (1) according to claim 2, **characterised in that** the radii of the inner side (17) of the tubular side wall (2) are greater than or equal to 2 mm, and preferably greater than or equal to 2.5 mm.

4. Cooking element (1) according to one of claims 1 to 3, **characterised in that** the tubular side wall (2) has an outer side (18) with no radii less than 0.9 mm, and preferably no radii less than 1 mm.

5. Cooking element (1) according to one of claims 1 to 4, **characterised in that** the tubular side wall (2) has an upright (10) having an upper end (15) extended by an outer annular edge (16).

6. Cooking element (1) according to one of claims 1 to 5, **characterised in that** the thickness of the tubular side wall (2) is substantially constant.

7. Cooking element (1) according to one of claims 1 to 6, **characterised in that** the thickness of the tubular side wall (2) is between 3 mm and 5 mm, and preferably between 3.5 mm and 4.5 mm.

8. Cooking element (1) according to one of claims 1 to 7, **characterised in that** the inclination of each inclined portion (19) flowing towards the open lower end (11) of the tubular side wall (2) is between 4° and 20° relative to a horizontal reference plane, and preferably between 5° and 15° relative to a horizontal reference plane.

9. Cooking element (1) according to one of claims 1 to 8, **characterised in that** the height of each flow passage (30) is at least 1 mm, and preferably at least 1.4 mm.

10. Cooking element (1) according to one of claims 1 to 9, **characterised in that** each bearing area (20) has a maximum circumferential width of 5 mm between two adjacent flow passages (30).

11. Cooking element (1) according to one of claims 1 to 10, **characterised in that** the removable bottom (3) comprises at least one elastic tab (40) having an upper retaining side (41) engaged with the tubular side wall (2) when the removable bottom (3) is mounted inside the tubular side wall (2).

12. Cooking element (1) according to claim 11, **characterised in that** the upper retaining side (41) rests against the tubular side wall (2) when the removable bottom (3) is mounted inside the tubular side wall (2).

13. Cooking element (1) according to claim 11 or 12, **characterised in that** the elastic tab (40) has a lower insertion side (42) extended by the upper retaining side (41), **in that** the lower insertion side (42) rests on the inner side (17) of the tubular side wall (2) when the removable bottom (3) is positioned in the tubular side wall (2), and **in that** the lower insertion side (42) can slide on the inner side (17) of the tubular side wall (2) to bring the upper retaining side (41) into engagement with the tubular side wall (2).

14. Cooking element (1) according to one of claims 11 to 13, **characterised in that** the removable bottom (3) has two elastic tabs (40) arranged opposite each other.

15. Steam cooking electrical appliance, comprising a heating base (4) to produce steam and a cooking element (1) carried and supplied with steam by the heating base (4), **characterised in that** the cooking element (1) is according to one of claims 1 to 14.
